# EUROPÄISCHE PATENTSCHRIFT

(11) **EP 4 344 528 B1**
(45) Veröffentlichungstag und Bekanntmachung des Hinweises auf die Patenterteilung: **26.02.2025**
(21) Anmeldenummer: 23195999.0
(22) Anmeldetag: 07.09.2023
(51) Int. Cl.: A01D 34/835, A01D 43/08, A01D 45/02

(54) **ERNTEVORSATZGERÄT ZUM FRONTSEITIGEN ANBAU AN EINE ERNTEMASCHINE MIT EINER MULCHEINHEIT**
HEADER FOR FRONTAL ATTACHMENT TO A HARVESTER WITH A MULCHING UNIT
TÊTE DE RÉCOLTE À MONTAGE FRONTAL SUR UNE RÉCOLTEUSE DOTÉE D'UNE UNITÉ DE BROYAGE

(30) Priorität: 30.09.2022 DE 102022125380
(43) Veröffentlichungstag der Anmeldung: 03.04.2024
(73) Patentinhaber: Maschinenfabrik Bernard Krone GmbH & Co. KG, 48480 Spelle (DE)
(72) Erfinder: Ahlmer, Frank, 49492 Westerkappeln (DE); Ester, Markus, 49832 Beesten (DE); Focks, Tobias, 48480 Spelle (DE); Bolsmann, Martin, 49832 Andervenne (DE); Lütke Lengerich, Steffen, 48341 Altenberge (DE)

(56) Entgegenhaltungen:
- DE-A1- 102017 222 587
- DE-A1- 102020 123 243
- DE-A1- 102020 202 976
- DE-A1- 102021 120 012

## Beschreibung

Die vorliegende Erfindung betrifft ein Erntevorsatzgerät zum frontseitigen Anbau an eine Erntemaschine, mit einem Rahmen, an dem eine Schneid- und/oder Fördereinrichtung zum Ernten von stängelartigem Erntegut angeordnet ist, und mit einer Mulcheinheit,
- die der Schneid- und/oder Fördereinrichtung in einer Gutflussrichtung nachgeordnet ist,
- die ein um eine Antriebsachse rotierend antreibbares Bearbeitungswerkzeug zum Bearbeiten von bei der Ernte in einem Feldboden verbleibenden Pflanzenstängeln aufweist,
- die sich in einer Ernteanordnung des Erntevorsatzgerätes in einer Erntestellung auf dem Feldboden abstützt, und
- die in der Ernteanordnung um eine erste Schwenkachse relativ zum Rahmen schwenkbar gelagert ist, so dass sie reversibel von der Erntestellung ausgehend bis in eine gegenüber der Erntestellung angehobene Feldstellung schwenkbar ist.

Die vorliegende Erfindung betrifft weiterhin eine Erntemaschine mit einem solchen Erntevorsatzgerät sowie ein Verfahren zum Überführen eines Erntevorsatzgerätes von einer Ernteanordnung in eine Transportanordnung.

Bei der Ernte von stängeligem Erntegut wie beispielsweise Mais oder Sonnenblumen werden oftmals Mulcheinheiten eingesetzt, um die im Feldboden verbleibenden Pflanzenstängel zu zerkleinern. Das Zerkleinern fördert die Verrottung. Weiterhin lassen sich die zerkleinerten Pflanzenstängel bei einer anschließenden Bodenbearbeitung besser einmischen. Zudem kann so einem Schädlingsbefall, beispielsweise durch Maiszünsler, vorgebeugt werden.

Solche Mulcheinheiten sind regelmäßig bodennah an einem Erntegerät, insbesondere einem Erntevorsatzgerät, angeordnet und einem zum Ernten des Erntegutes vorgesehenen Schneidwerkzeug des Erntegerätes in einer Gutflussrichtung nachgeordnet.

Die Druckschrift DE 10 2020 123 243 A1 offenbart ein Erntevorsatzgerät mit einem im Betrieb am Feldboden abgestützten Unterflurhäcksler. Der Unterflurhäcksler ist mittels Lenkern, die ein Viergelenk bilden, an das Gehäuse des Erntevorsatzgerätes gekoppelt.

Ein Erntevorsatzgerät wird beim Erntebetrieb auf dem Feld regelmäßig in einer Ernteanordnung betrieben, in der es sich in eine etwa bodenparallele Querrichtung quer zur Fahrtrichtung erstreckt. Dadurch ist das Erntevorsatzgerät jedoch gegenüber der es tragenden Erntemaschine zu beiden Seiten weit auskragend angeordnet. Um solch ein Erntevorsatzgerät mit der Erntemaschine auf der Straße transportieren zu können, ist es zusammenklappbar ausgebildet, wobei es Bearbeitungsabschnitte aufweist, die zumindest teilweise relativ zueinander von der etwa bodenparallelen in eine aufgerichtete Stellung überführbar sind. In einer Transportanordnung des Erntevorsatzgerätes erstrecken sich die aufgerichteten Bearbeitungsabschnitte dann beispielsweise vertikal oder in einem kleinen spitzen Winkel dazu.

Bei Erntevorsatzgeräten mit Mulcheinheiten werden diese beim Überführen des Erntevorsatzgerätes von der für den Erntebetrieb auf dem Feld genutzten Ernteanordnung in die für den Straßenbetrieb genutzte Transportanordnung gemeinsam mit dem Bearbeitungsabschnitt, an dem sie angeordnet sind, verstellt. Die Mulcheinheiten vergrößern jedoch die Ausmaße des Erntevorsatzgerätes, so dass das Sichtfeld des Fahrers bei einem Erntevorsatzgerät mit Mulcheinheiten in der Transportanordnung stärker eingeschränkt ist, als bei einem Erntevorsatzgerät ohne Mulcheinheiten.

Erntevorsatzgeräte mit für den Strassenbetrieb anklappbaren Mulcheinheiten sind aus DE 10 2017 222 587 A1 und DE 10 2020 202 976 A1 bekannt.

Aufgabe der vorliegenden Erfindung ist es, ein Erntevorsatzgerät mit einer Mulcheinheit zu schaffen, bei dem das Sichtfeld des Fahrers im Straßenbetrieb im Vergleich zu einem Erntevorsatzgerät ohne Mulcheinheit möglichst wenig oder gar nicht weiter eingeschränkt ist.

Die Aufgabe wird gelöst mit einem Erntevorsatzgerät mit den Merkmalen des unabhängigen Patentanspruchs 1, einer Erntemaschine mit den Merkmalen des unabhängigen Patentanspruchs 12, sowie einem Verfahren mit den Merkmalen des unabhängigen Patentanspruchs 14. Vorteilhafte Ausführungsformen sind den abhängigen Ansprüchen entnehmbar.

Dafür wird ein Erntevorsatzgerät mit einer Mulcheinheit geschaffen. Das Erntevorsatzgerät ist zum frontseitigen Anbau an eine Erntemaschine vorgesehen. Es weist einen Rahmen auf, an dem eine Schneid- und/oder Fördereinrichtung zum Ernten von stängelartigem Erntegut angeordnet ist. Die Mulcheinheit ist der Schneid- und/oder Fördereinrichtung in einer Gutflussrichtung nachgeordnet. Sie weist ein um eine Antriebsachse rotierend antreibbares Bearbeitungswerkzeug zum Bearbeiten von bei der Ernte in einem Feldboden verbleibenden Pflanzenstängeln auf. Weiterhin stützt sie sich in einer Ernteanordnung des Erntevorsatzgerätes in einer Erntestellung auf dem Feldboden ab. In der Ernteanordnung wird das Erntevorsatzgerät in eine Fahrtrichtung bodenkopierend über den Feldboden geführt. Dabei erstreckt es sich in eine Querrichtung quer zur Fahrtrichtung. Die Mulcheinheit wird in der Ernteanordnung daher mit dem Erntevorsatzgerät in Fahrtrichtung über den Feldboden geführt. Zudem ist sie um eine erste Schwenkachse relativ zum Rahmen des Erntevorsatzgerätes schwenkbar gelagert. Dadurch ist sie reversibel von der Erntestellung ausgehend um die erste Schwenkachse bis in eine gegenüber der Erntestellung angehobene Feldstellung schwenkbar. Im Erntebetrieb kann die Mulcheinheit daher um die erste Schwenkachse zwischen der Erntestellung und der Feldstellung hin und her schwenken. Dadurch folgt sie Bodenunebenheiten.

Das Erntevorsatzgerät zeichnet sich dadurch aus, dass die erste Schwenkachse zum Verstellen der Mulcheinheit von der Erntestellung in eine angehobene Transportstellung um eine zweite Schwenkachse relativ zum Rahmen schwenkbar vorgesehen ist.

Die Mulcheinheit wird daher beim Verstellen in die Transportstellung gemeinsam mit der ersten Schwenkachse ausgehend von der Erntestellung um die zweite Schwenkachse relativ zum Rahmen verschwenkt.

Im Vergleich zu einer Mulcheinheit, die nur um die erste Schwenkachse schwenkbar am Rahmen des Erntevorsatzgerätes gelagert ist, ist die erfindungsgemäße Mulcheinheit aufgrund ihrer zusätzlichen Schwenkbarkeit um die zweite Schwenkachse flexibler im Raum positionierbar. Beim Schwenken der ersten Schwenkachse um die zweite Schwenkachse ändern sich ein Schwenkwinkel der Mulcheinheit um die erste Schwenkachse und/oder ein Abstand der Mulcheinheit vom Rahmen des Erntevorsatzgerätes. Dadurch kann die Mulcheinheit mit einem größeren Abstand vom Rahmen und mit einem anderen, vorzugsweise größeren, Schwenkwinkel positioniert werden. Die Schwenkbarkeit um die zweite Schwenkachse ermöglicht daher in einer Transportanordnung des Erntevorsatzgerätes eine veränderte Anordnung der Mulcheinheit im Raum, durch die das Sichtfeld des Fahrers im Straßenbetrieb im Vergleich zu einem Erntevorsatzgerät ohne Mulcheinheit, oder im Vergleich zu einem Erntevorsatzgerät, das nur die Schwenkbarkeit der Mulcheinheit um die erste Schwenkachse ermöglicht, nur geringfügig oder sogar gar nicht weiter eingeschränkt ist.

Dafür weist die Mulcheinheit bevorzugt einen Schwenkaktor auf, der zum Verschwenken der Mulcheinheit von der Erntestellung in die Transportstellung vorgesehen ist. Als Schwenkaktor wird bevorzugt ein hydraulischer oder elektrohydraulischer Zylinder oder ein Linearmotor verwendet. Prinzipiell ist auch die Nutzung eines pneumatisch wirkenden Aktors möglich.

Im Erntebetrieb ist es bevorzugt, dass die Mulcheinheit auf dem Feldboden aufliegt. Vorzugsweise ist der Schwenkaktor dafür nicht druckbelastet. Dadurch kann die Mulcheinheit zwischen der Erntestellung und der Feldstellung frei verschwenken und so den Bodenunebenheiten folgen. Um ein schnelles Anheben der Mulcheinheit, beispielsweise bei einer Blockade des Bearbeitungswerkzeugs, zu ermöglichen, ist es ebenfalls bevorzugt, dass der Schwenkaktor zum Verschwenken der Mulcheinheit von der Erntestellung in die Feldstellung mit einem Druck beaufschlagbar ist.

In einer bevorzugten Ausführungsform ist der Schwenkaktor durch Einfahren von einem teilausgefahrenen Erntezustand in der Erntestellung der Mulcheinheit in einen Feldzustand verstellbar, in der die Mulcheinheit gegenüber der Erntestellung in die angehobene Feldstellung verschwenkt, und der Schwenkaktor gegenüber dem Erntezustand eingefahren ist. Das Anheben der Mulcheinheit von der Erntestellung in die Feldstellung wird in dieser Ausführungsform durch ein Einfahren des Schwenkaktors bewirkt.

In einer ebenfalls bevorzugten Ausführungsform ist der Schwenkaktor durch Ausfahren von dem teilausgefahrenen Erntezustand in der Erntestellung der Mulcheinheit in einen Transportzustand verstellbar, in der die Mulcheinheit gegenüber der Erntestellung in die angehobene Transportstellung verschwenkt, und der Schwenkaktor gegenüber dem Erntezustand ausgefahren ist. Das Anheben der Mulcheinheit von der Erntestellung in die Transportstellung wird in dieser Ausführungsform durch ein Ausfahren des Schwenkaktors bewirkt.

Das Anheben der Mulcheinheit von der Erntestellung in die Feldstellung erfolgt daher durch Einfahren, und das Anheben von der Erntestellung in die Transportstellung durch Ausfahren des Schwenkaktors. Dabei ist ein Abstand der Mulcheinheit vom Feldboden in der Transportstellung bevorzugt größer als in der Feldstellung.

Dabei kann der Schwenkaktor im Feldzustand maximal eingefahren und im Transportzustand maximal ausgefahren sein. Es sind aber auch Zwischenzustände als Feldzustand und/oder als Transportzustand möglich, in denen der Schwenkaktor teilaus- oder teileingefahren ist.

Das Erntevorsatzgerät weist bevorzugt eine Befestigungskonsole auf, mit der die Mulcheinheit am Rahmen des Erntevorsatzgerätes befestigt ist, wobei die Befestigungskonsole einen feststehenden Konsolenteil, der ortsfest am Rahmen angeordnet ist, und einen schwenkbaren Konsolenteil umfasst, der relativ zum feststehenden Konsolenteil um die zweite Schwenkachse schwenkbar am feststehenden Konsolenteil gelagert ist. Der schwenkbare Konsolenteil wird daher beim Schwenken relativ zum feststehenden Konsolenteil auch relativ zum Rahmen verschwenkt. Dafür durchsetzt die zweite Schwenkachse bevorzugt den feststehenden und den schwenkbaren Konsolenteil.

Der Schwenkaktor ist bevorzugt einenends um die zweite Schwenkachse drehbar an dem feststehenden Konsolenteil, und anderenends um eine Anlenkachse drehbar an der Mulcheinheit, vorzugsweise an einem Mulcherrahmen der Mulcheinheit, angelenkt. Durch die nahe Anordnung des Schwenkaktors am tragenden Rahmen werden die Kräfte beim Schwenken der Mulcheinheit leicht in den tragenden Rahmen eingeleitet. Zudem ist diese Anordnung sehr kompakt und bauraumsparend.

Vorzugsweise ist der feststehende Konsolenteil lösbar am Rahmen befestigt, so dass die Mulcheinheit vom Rahmen abnehmbar ist. Sie kann dann beispielsweise zu Wartungszwecken vom Erntevorsatzgerät abgebaut werden, oder nur bedarfsweise in das Erntevorsatzgerät angebaut werden.

In einer bevorzugten Ausführungsform ist der feststehende Konsolenteil etwa u-förmig ausgebildet. Vorzugsweise weist er zwei einander gegenüberliegende Schenkel auf, die voneinander beabstandet und durch einen Querverbinder miteinander verbunden sind. Der Querverbinder ist bevorzugt am Rahmen, insbesondere lösbar, befestigt. Vorzugsweise ist er an den Rahmen des Erntevorsatzgerätes angeschraubt. Weiterhin bevorzugt ist der schwenkbare Konsolenteil an den beiden Schenkeln um die zweite Schwenkachse schwenkbar gelagert.

Zum Verschwenken der Mulcheinheit und der ersten Schwenkachse um die zweite Schwenkachse ist die Mulcheinheit bevorzugt um die erste Schwenkachse schwenkbar am schwenkbaren Konsolenteil gelagert. Dafür ist es bevorzugt, dass die erste Schwenkachse das schwenkbare Konsolenteil durchsetzt. Dabei sind die erste und die zweite Schwenkachse bevorzugt voneinander beabstandet vorgesehen.

Das Erntevorsatzgerät weist bevorzugt eine Verbindungsanordnung auf, mit der der schenkbare Konsolenteil am Rahmen festlegbar ist. Dabei ist es bevorzugt, dass der schwenkbare Konsolenteil im Erntebetrieb am Rahmen festgelegt ist. Die Mulcheinheit ist dann nicht um die zweite Schwenkachse schwenkbar. Ein Schwenkradius, das heißt ein Abstand der Mulcheinheit vom Rahmen, ist dadurch konstant.

Die Verbindungsanordnung umfasst dafür bevorzugt ein Verbindungsmittel und ein Verbindungsgegenmittel, die zusammenwirken, wenn der schwenkbare Konsolenteil am Rahmen festgelegt ist. Der schwenkbare Konsolenteil und die Mulcheinheit sind bei festgelegter Verbindungsanordnung nicht um die zweite Schwenkachse schwenkbar.

Zum Verstellen der Mulcheinheit von der Erntestellung in die Transportstellung ist es bevorzugt, dass die Verbindungsanordnung lösbar vorgesehen ist. Im einem gelösten Zustand der Verbindungsanordnung wirken das Verbindungsmittel und das Verbindungsgegenmittel nicht zusammen. Das schwenkbare Konsolenteil und die Mulcheinheit sind dann um die zweite Schwenkachse schwenkbar.

Durch das Lösen der Verbindungsanordnung ist daher nicht nur der Schwenkwinkel sondern auch der Schwenkradius der Mulcheinheit, das heißt ihr Abstand vom Rahmen, veränderbar. Zudem kann die Mulcheinheit dadurch gleichzeitig um die erste Schwenkachse und um die zweite Schwenkachse verschwenkt werden.

Um ein kontrolliertes Verschwenken der Mulcheinheit an eine definierte Position im Raum zu ermöglichen, ist es weiterhin bevorzugt, dass die Mulcheinheit ein Lenkmittel umfasst, das sich zwischen dem feststehenden Konsolenteil und der Mulcheinheit erstreckt, und welches die Mulcheinheit bei gelöster Verbindungsanordnung während des Ausfahrens des Schwenkaktors in die Transportstellung lenkt. Das Lenkmittel verbindet den schwenkbaren Konsolenteil und die Mulcheinheit bevorzugt in der Art eines Koppelgetriebes. Vorzugsweise ist das Lenkmittel als Zugseil ausgebildet. Es ist bevorzugt einenends zur zweiten Schwenkachse räumlich versetzt an dem feststehenden Konsolenteil, und anderenends zur Anlenkachse räumlich versetzt an der Mulcheinheit, vorzugsweise am Mulcherrahmen der Mulcheinheit, befestigt. Da eine Länge des Lenkmittels konstant ist, wird die Mulcheinheit beim Ausfahren des Schwenkaktors angehoben. Eine Längenänderung des Schwenkaktors wird dabei durch Schwenken des schwenkbaren Konsolenteils und der Mulcheinheit, insbesondere relativ zueinander und/oder relativ zum Rahmen, ausgeglichen. Der schwenkbare Konsolenteil wird dabei in Richtung zum Schwenkaktor hin gezogen.

Das Lenkmittel, das ortsfest zwischen dem Rahmen und der Mulcheinheit angeordnet ist, verhindert eine unkontrollierte Rotation um die zweite Schwenkachse während der Schwenkaktor ausfährt. Zudem kann mit dem Lenkmittel die genaue Transportstellung der Mulcheinheit eingestellt werden, wenn die Einschränkung des Sichtfeldes dies erforderlich macht.

In einer bevorzugten Ausführungsform weist die Verbindungsanordnung einen Betätigungsaktor auf, der zum automatischen Verbinden der Verbindungsanordnung, insbesondere des Verbindungsmittels mit dem Verbindungsgegenmittel, und zum automatischen Lösen der Verbindungsanordnung, insbesondere des Verbindungsmittels vom Verbindungsgegenmittel, vorgesehen ist. Das Verbinden und Lösen der Verbindungsanordnung kann dadurch, insbesondere beim Verstellen des Erntevorsatzgerätes von der Ernteanordnung in die Transportanordnung oder zurück, automatisch ausgelöst werden. Alternativ oder zusätzlich ist bevorzugt ein Auslösen durch den Fahrer möglich, beispielsweise durch einen Knopfdruck, vorzugsweise von der Fahrerkabine aus.

Das Erntevorsatzgerät weist bevorzugt wenigstens zwei Bearbeitungsabschnitte auf, wobei es von der Ernteanordnung, in der sich die Bearbeitungsabschnitte, insbesondere bodenparallel, in eine Querrichtung erstrecken, in die Transportanordnung verstellbar ist, in der die Bearbeitungsabschnitte gegenüber der Ernteanordnung aufgerichtet sind. Vorzugsweise erstrecken sich die Bearbeitungsabschnitte in der Transportanordnung in Hochrichtung oder in einem (kleinen) spitzen Winkel dazu. Die Hochrichtung erstreckt sich dabei quer zur Fahrt- und quer zur Querrichtung.

An jedem der Bearbeitungsabschnitte ist bevorzugt mindestens eine Mulcheinheit angeordnet. Dabei ist es besonders bevorzugt, dass die Mulcheinheit beim automatischen Verstellen des Erntevorsatzgerätes von der Ernteanordnung in die Transportanordnung automatisch von der Erntestellung in die Transportstellung verschwenkt wird.

Die Mulcheinheit kann aber auch erst nach dem Verstellen des Erntevorsatzgerätes von der Ernteanordnung in die Transportanordnung von der Erntestellung in die Transportstellung verschwenkt werden, insbesondere auf Knopfdruck durch den Fahrer. Das Verschwenken der Mulcheinheit von der Erntestellung in die Transportstellung kann zudem unabhängig vom Verstellen des Erntevorsatzgerätes von der Ernteanordnung in die Transportanordnung vorgesehen sein, vorzugsweise auch in der Ernteanordnung während des Erntebetriebs, beispielsweise ausgelöst durch den Fahrer.

In einer besonders bevorzugten Ausführungsform weist das Erntevorsatzgerät eine Vielzahl Mulcheinheiten auf. Dabei ist es bevorzugt, dass einige oder alle Bearbeitungsabschnitte eine Vielzahl Mulcheinheiten aufweisen. In dieser Ausführungsform ist es weiterhin bevorzugt, dass die Mulcheinheiten gruppenweise oder einzeln von der Erntestellung in die Transportstellung verschwenkt werden, insbesondere beim oder nach dem Verstellen des Erntevorsatzgerätes von der Ernteanordnung in die Transportanordnung.

Auch das Zurückschwenken der Mulcheinheit oder der Mulcheinheiten kann automatisch beim oder automatisch nach dem Zurückstellen des Erntevorsatzgerätes von der Transportanordnung in die Ernteanordnung erfolgen.

Alternativ kann es auch unabhängig davon sein und insbesondere ausgelöst durch den Fahrer erfolgen.

Die Aufgabe wird weiterhin gelöst mit einer Erntemaschine mit einem solchen Erntevorsatzgerät. Das Erntevorsatzgerät ist frontseitig der Erntemaschine angebaut.

Die Erntemaschine weist in einer bevorzugten Ausführungsform eine Steuerungseinheit auf, die dazu eingerichtet ist, die Mulcheinheit automatisch von der Erntestellung in die Transportstellung zu verschwenken. In einer bevorzugten Ausführungsform ist sie dazu eingerichtet, die Mulcheinheit beim Überführen des Erntevorsatzgerätes von der Ernteanordnung in die Transportanordnung automatisch von der Erntestellung in die Transportstellung zu verschwenken. Dafür ist es bevorzugt, dass die Steuerungseinheit sowohl den Schwenkaktor als auch den Betätigungsaktor zum Lösen und Verbinden der Verbindungsanordnung steuert. Das Verschwenken der Mulcheinheit von der Erntestellung in die Transportstellung kann aber auch unabhängig vom Verstellen des Erntevorsatzgerätes erfolgen, und/oder manuell, insbesondere durch den Fahrer. Die Steuerungseinheit kann ein Bestandteil der Erntemaschine oder alternativ des Erntevorsatzgerätes sein.

Die Aufgabe wird weiterhin gelöst mit einem Verfahren zum Überführen eines solchen Erntevorsatzgerätes von einer Ernteanordnung in eine Transportanordnung, bei dem Bearbeitungsabschnitte des Erntevorsatzgerätes von einer Querstellung, in der sie sich, insbesondere bodenparallel, in eine Querrichtung erstrecken, in eine Hochstellung, in der sie gegenüber der Querstellung verstellt, beispielsweise aufgerichtet, sind, verstellt werden. In der Hochstellung erstreckt sich das Erntevorsatzgerät bevorzugt in die Hochrichtung quer zur Querrichtung und quer zur Fahrtrichtung, oder in einem kleinen spitzen Winkel dazu.

Das Verfahren sieht weiterhin vor, dass während das Erntevorsatzgerät von der Ernteanordnung in die Transportanordnung überführt wird, zunächst eine Verbindungsanordnung des Erntevorsatzgerätes gelöst wird, so dass die Mulcheinheit um eine zweite Schwenkachse schwenkbar ist, und dass die Mulcheinheit dann von der Erntestellung in die Transportstellung verschwenkt wird. Bei diesem Verfahren wird das Verschwenken der Mulcheinheit daher automatisch während des Verstellens des Erntevorsatzgerätes durchgeführt. Dadurch wird der Fahrer nicht durch das Verschwenken der Mulcheinheit belastet.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: ein Erntevorsatzgerät mit einer Mulcheinheit in einer perspektivischen Ansicht;
- Fig. 2: einen Ausschnitt aus dem Erntevorsatzgerät der Fig. 1;
- Fig. 3: einen Ausschnitt aus der Mulcheinheit sowie eine Befestigungskonsole des Erntevorsatzgerätes der Fig. 1, mit der die Mulcheinheit am Rahmen des Erntevorsatzgerätes befestigt ist;
- Fig. 4: in (a) und (b) jeweils eine Mulcheinheit und ihre Anbindung an einen Rahmen des Erntevorsatzgerätes der Fig. 1 in verschiedenen perspektivischen Ansichten;
- Fig. 5: in (a) - (e) jeweils ein Schnittbild durch die Mulcheinheit der Fig. 4 in verschiedenen Stellungen und in (f) eine weitere perspektivische Ansicht der Mulcheinheit der Fig. 4; und
- Fig. 6: in (a) und (b) jeweils einen Ausschnitt aus einer Erntemaschine, an der frontseitig das Erntevorsatzgerät der Fig. 1 angebaut ist, in einer Ansicht von oben.

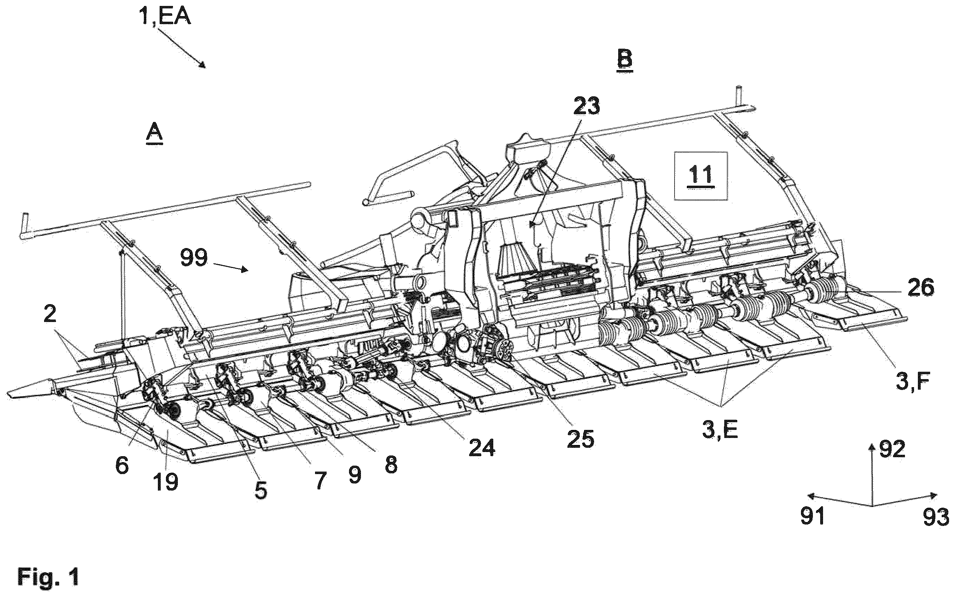

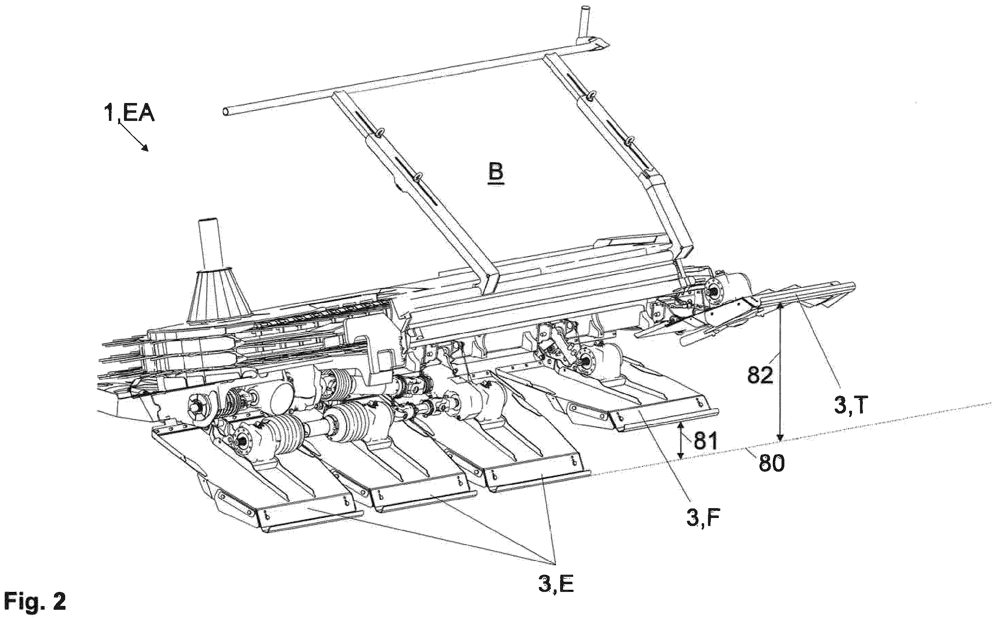

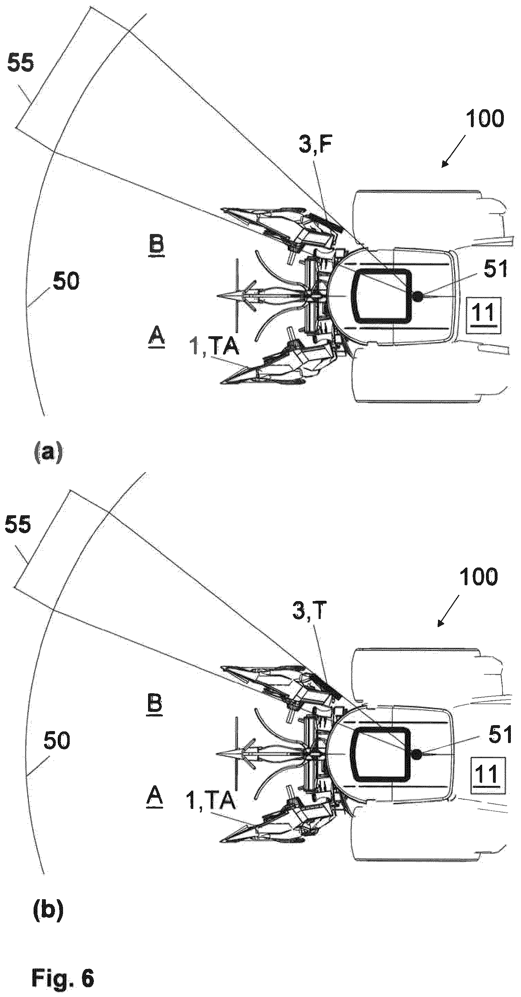

Fig. 1 zeigt ein Erntevorsatzgerät 1 für eine Erntemaschine 100 (s. Fig. 6) wie beispielsweise einen Feldhäcksler oder einen Mähdrescher. Das Erntevorsatzgerät 1 ist frontseitig an die Erntemaschine 100 anbaubar. Es ist hier in der Art eines Maisgebisses ausgeführt. Zum Anbauen an die Erntemaschine 100 weist es eine Einzugsanordnung 23 auf, die mittig des Erntevorsatzgerätes 1 angeordnet ist. Zur Leistungsübertragung ist das Erntevorsatzgerät 1 mittels eines Zapfwellenanschlusses 25 an eine Zapfwelle (nicht gezeigt) der Erntemaschine 100 anschließbar. In einem Erntebetrieb der Erntemaschine 100 wird das an diese angebaute Erntevorsatzgerät 100 in eine Fahrtrichtung 91 bodenkopierend über einen Feldboden 80 (s. Fig. 2) geführt.

Das Erntevorsatzgerät 1 ist hier in einer Ernteanordnung EA gezeigt, in der es sich in eine Querrichtung 93 erstreckt, die quer zur Fahrtrichtung 91 ausgerichtet ist. Es weist zwei Bearbeitungsabschnitte A, B auf. Ein (in der Zeichenebene) linker Abschnitt A und ein (in der Zeichenebene) rechter Abschnitt B erstrecken sich in der Ernteanordnung EA in die Querrichtung 93 und sind etwa bodenparallel angeordnet. Um bei einem Straßenbetrieb kompakte Ausmaße zu realisieren, ist das Erntevorsatzgerät 1 zusammenklappbar ausgebildet, so dass es von der Ernteanordnung EA in eine Transportanordnung TA (s. Fig. 6) überführbar ist. Dafür werden die Bearbeitungsabschnitte A, B von der etwa bodenparallelen in eine aufgerichtete Stellung (nicht bezeichnet) überführt. In der aufgerichteten Stellung erstrecken sie sich beispielsweise in eine Hochrichtung 92, die quer zur Fahrtrichtung 91 und quer zur Querrichtung 93 ausgerichtet ist, oder in einem kleinen spitzen Winkel (nicht gezeigt) dazu. In der Transportanordnung TA überschreitet die Erntemaschine 100 mit dem von ihr getragenen Erntevorsatzgerät 1 die im Straßenverkehr erlaubten Ausmaße nicht.

Zum Ernten von stängeligem Erntegut (nicht gezeigt) weist das Erntevorsatzgerät 1 eine Schneid- und/oder Fördereinrichtung 2 auf. Dabei wird das Erntegut mit der Schneid- und/oder Fördereinrichtung 2 geschnitten und in einer Gutflussrichtung 99 zur Einzugsanordnung 25 hin und in die Erntemaschine 100 gefördert.

Es hat sich als vorteilhaft erwiesen, die nach dem Schnitt im Feldboden 80 verbliebenen Pflanzenstängel zu zerkleinern, zu zerstampfen und/oder zu zerfasern, beispielsweise um eine Verrottung der Pflanzenstängel zu fördern.

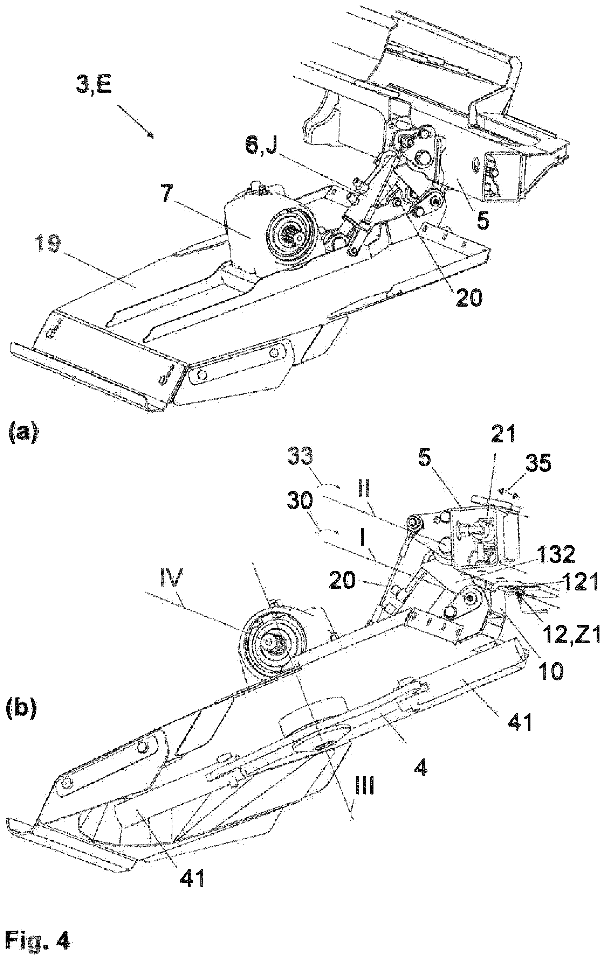

Zur Bearbeitung der Pflanzenstängel weist das Erntevorsatzgerät 1 eine Vielzahl Mulcheinheiten 3 auf. Die Mulcheinheiten 3 sind zum mechanischen Bearbeiten, insbesondere zum Zerkleinern, der bei der Ernte im Feldboden 80 verbleibenden Pflanzenstängel (nicht gezeigt) vorgesehen. Dafür weisen sie ein Bearbeitungswerkzeug 4 (s. Fig. 4 (b)) auf. Sie sind der Schneid- und/oder Fördereinrichtung 2 in Gutflussrichtung 11 nachgeordnet. Daher bearbeiten sie die Pflanzenstängel mit ihrem Bearbeitungswerkzeug 4, nachdem die Schneid- und/oder Fördereinrichtung 2 das Erntegut abgeschnitten hat.

Die Mulcheinheiten 3 sind über eine gesamte Arbeitsbreite (nicht bezeichnet) des Erntevorsatzgerätes 1 gleichmäßig verteilt angeordnet, damit die Pflanzenstängel über die gesamte Arbeitsbreite des Erntevorsatzgerätes 1 bearbeitet werden. Dabei ist hier an jedem Bearbeitungsabschnitt A, B dieselbe Anzahl Mulcheinheiten 3 vorgesehen.

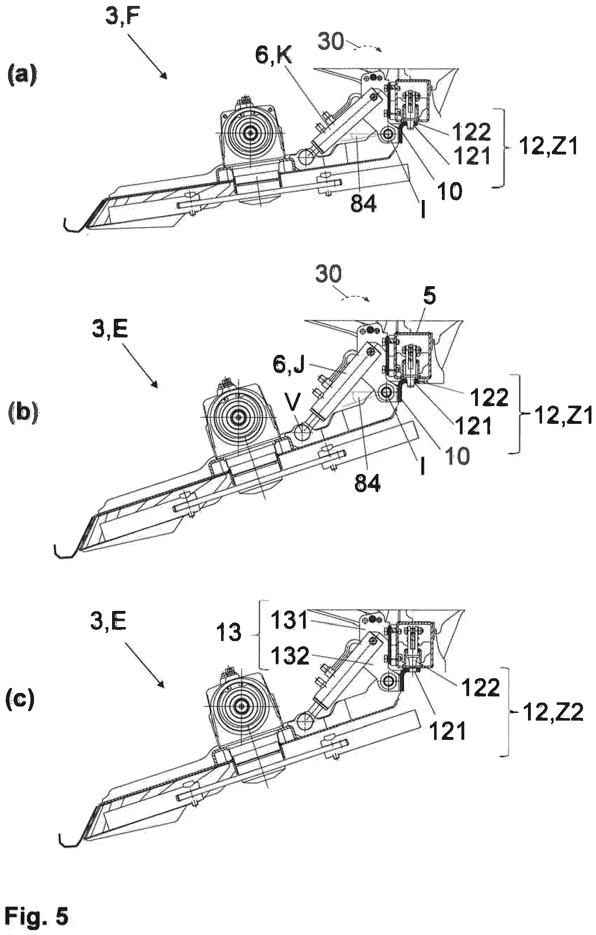

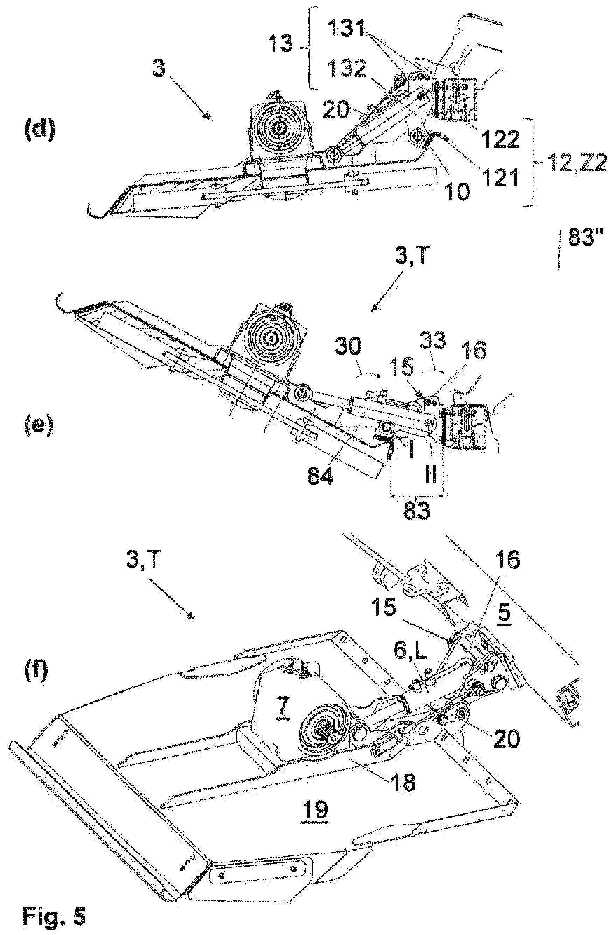

Das Bearbeitungswerkzeug 4 ist an einer dem Feldboden 80 zugewandten Seite einer Abdeckung 19 angeordnet, die verhindert, dass mit dem Bearbeitungswerkzeug 4 bearbeitete Pflanzenstängel im Erntebetrieb hochgeschleudert werden. Dies wird im Rahmen der Fig. 4 und 5 weiter beschreiben.

Zum Antreiben der Mulcheinheiten 3 ist für jeden der Bearbeitungsabschnitte A, B jeweils ein Antriebsstrang (nicht bezeichnet) vorgesehen, innerhalb dessen die in dem Bearbeitungsabschnitt A, B angeordneten Mulcheinheiten 3 antreibbar sind. Die Mulcheinheiten 3 sind in ihrem Antriebsstrang in Reihe hintereinander angeordnet. Der Antriebsstrang umfasst dafür eine Antriebswelle 24. Weiterhin umfasst er für jede der Mulcheinheiten 3 ein Getriebe 7. Zudem umfasst er Gelenkwellen 8, mit denen die Getriebe 7 benachbarter Mulcheinheiten 3 gelenkig miteinander verbunden sind. Um ein Höhenverstellen der Mulcheinheiten 3 relativ zueinander zu ermöglichen, sind die Antriebswelle 24 und die Getriebe 7 jeweils mittels Kardangelenke 9 miteinander verbunden. In Fig. 1 sind im rechten Bearbeitungsabschnitt B um die Gelenkwellen 8 und Kardangelenke 9 Staubund/oder Spritzschutzmittel 26 angeordnet, die im linken Bearbeitungsabschnitt A zur Verdeutlichung nicht dargestellt sind.

Das Erntevorsatzgerät 1 mit den Mulcheinheiten 3 wird über ein Hauptgetriebe (nicht bezeichnet) angetrieben. Das Hauptgetriebe weist den Zapfwellenanschluss 25 auf, mit dem es leistungsempfangend an die Erntemaschine 100 anschließbar ist. Abtriebsseitig ist es an die Antriebswellen 24 der Antriebsstränge zum Antrieb der Mulcheinheiten 3 angeschlossen. Weiterhin ist es abtriebsseitig an einen Antriebsstrang (nicht gezeigt) zum Antrieb der Schneid- und/oder Fördereinrichtung 2 angeschlossen. Es können noch weitere Antriebsstränge (nicht gezeigt) zum Antrieb weiterer Komponenten des Erntevorsatzgerätes 1 vorgesehen sein.

Die Mulcheinheiten 3 sind an einem tragenden Rahmen 5 des Erntevorsatzgerätes 1 angeordnet und jeweils relativ zu diesem schwenkbar gelagert. Zum Verschwenken weisen sie jeweils einen Schwenkaktor 6 auf. Die Schwenkaktoren 6 sind mittels einer Steuerungseinheit 11 steuerbar. Die Steuerungseinheit 11 kann ein Bestandteil des Erntevorsatzgerätes 1 oder der Erntemaschine 100 sein.

In einer Erntestellung E sind die Schwenkaktoren der Mulcheinheiten 3 nicht druckbelastet. Dadurch können die Mulcheinheiten 3 jeweils frei von der Erntestellung E, in der sie, insbesondere mit ihrer Gewichtskraft, auf dem Feldboden 80 aufliegen, in eine angehobene Feldstellung F schwenken. Dabei werden sie um eine erste Schwenkachse I verschwenkt.

Die Steuerungseinheit 11 ist dazu eingerichtet, die Mulcheinheiten 3 von der Erntestellung E in eine angehobene Transportstellung T, in der sie von diesem beabstandet sind, zu verschwenken. Zum Anheben wird jeweils ihr Schwenkaktor 6 genutzt. Zusätzlich kann auch ein Anheben der Mulcheinheiten 3 durch ein Druckbeaufschlagen der Schwenkaktoren 6 von der Erntestellung E in die Feldstellung F vorgesehen sein, beispielsweise zum Überwinden von Hindernissen wie Steinen (nicht gezeigt).

Durch das Anheben wird die angehobene Mulcheinheit 3 in einem Abstand 81, 82 (s. Fig. 2) über den Feldboden 80 geführt. Das Anheben in die Transportstellung T wird vor allem in der Transportanordnung TA des Erntevorsatzgerätes 1 genutzt, um ein Sichtfeld 50 (s. Fig. 6) eines die Erntemaschine 100 fahrenden Fahrers (nicht gezeigt) nicht unnötig durch die Mulcheinheiten 3 einzuschränken.

In Fig. 1 sind die Mulcheinheiten 3 im linken Bearbeitungsabschnitt A alle in der Erntestellung E dargestellt, während im rechten Bearbeitungsabschnitt B eine der Mulcheinheiten 3 gegenüber den anderen Mulcheinheiten 3 in der angehobenen Feldstellung F gezeigt ist.

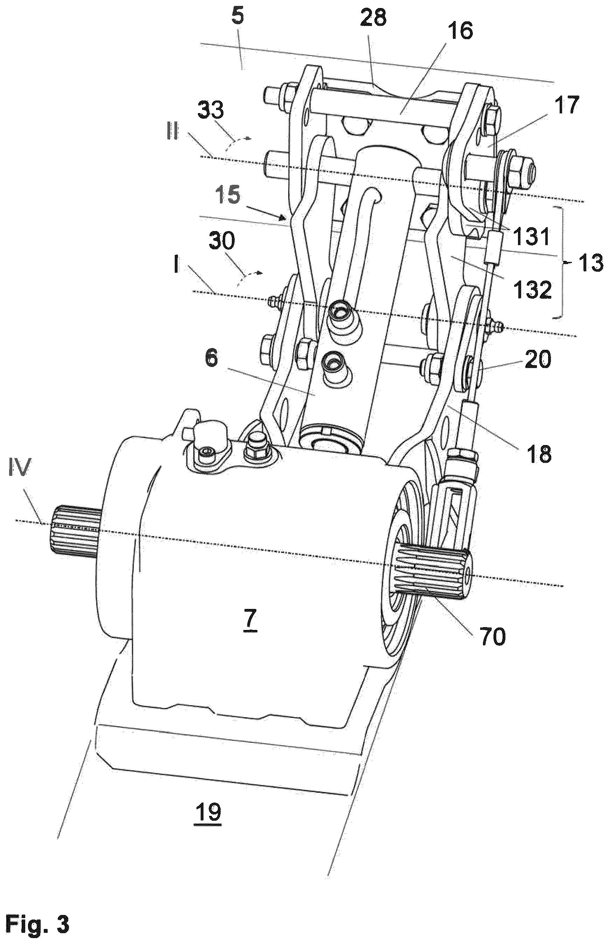

Sichtbar ist, dass sich die Gelenkwelle 8 des Antriebsstrangs zwischen der in der angehobenen Feldstellung F angeordneten Mulcheinheit 3 und der benachbarten, in der Erntestellung E angeordneten Mulcheinheit 3 in einem Winkel (nicht bezeichnet) zur Querrichtung 93 erstreckt. Die Getriebe 7 dieser Mulcheinheiten 3 sind dadurch in Hochrichtung 92 zueinander versetzt angeordnet. Dies ist möglich, indem die Gelenkwellen 8 zwischen den Getrieben 7 der Mulcheinheiten 3 jeweils mittels Kardangelenke 9 an Getriebewellen 70 (s. Fig. 3) der Getriebe 7 angebunden sind.

Im Antriebsstrang sind die Getriebe 7 in Reihe (nicht bezeichnet) hintereinander angeordnet und durch die Gelenkwellen 8 miteinander verbunden. Dafür sind die Getriebe 7 als T- Getriebe ausgebildet und weisen jeweils die Getriebewelle 70 auf, die sie durchsetzt. Antriebsseitig ist die Getriebewelle 70 des ersten Getriebes 7 der Reihe an die Antriebswelle 24 des Erntevorsatzgerätes 1 oder an ein dem Getriebe vorgeschaltetes Stirnradgetriebe angeschlossen. Die Getriebewellen 70 der nachgeordneten Getriebe 7 sind antriebsseitig jeweils an die Getriebewelle 70 des ihnen benachbarten, vorgeordneten Getriebes 7 angeschlossen. Abtriebsseitig sind sie, ausgenommen das letzte Getriebe 7 der Reihe, daher jeweils zum Antrieb des ihnen benachbarten, nachfolgenden Getriebes 7 vorgesehen. Dabei sind die Gelenkwellen 8 mittels der Kardangelenke 9 an die Getriebewellen 70 des nachfolgenden Getriebes 7 angelenkt. Diese Anlenkung ermöglicht den räumlichen Versatz zwischen den Getrieben 7, so dass die Mulcheinheiten 3 jeweils relativ zu ihren benachbarten Mulcheinheiten 3 anhebbar ist.

Fig. 2 zeigt einen Ausschnitt aus dem Erntevorsatzgerät 1 der Fig. 1 in der Ernteanordnung EA. Dargestellt ist der rechte Bearbeitungsabschnitt B des Erntevorsatzgerätes 1. In der Darstellung sind die Einzugsanordnung 23 sowie einige der die Mulcheinheiten 3 verbindenden Gelenkwellen 8 und Kardangelenke 9 vereinfachend nicht gezeigt.

Die Figur zeigt eine an einem äußeren Ende (nicht bezeichnet) des Bearbeitungsabschnitts B in die Transportstellung T angehobene Mulcheinheit 3, ihr benachbart eine in die Feldstellung F angehobene Mulcheinheit 3, und dieser benachbart einige in der Erntestellung E angeordnete Mulcheinheiten 3.

Die in der Erntestellung E angeordneten Mulcheinheiten liegen im Erntebetrieb E unmittelbar auf dem Feldboden 80 auf. Sie stützen sich mittels einer Gleitkufe (nicht bezeichnet) auf dem Feldboden 80 ab. Dabei liegen sie mit ihrer Gewichtskraft auf dem Feldboden 80 auf.

Die Mulcheinheit 3 in der Feldstellung F ist in einem ersten Abstand 81 zum Feldboden 80 angeordnet. Die Mulcheinheit 3 in der Transportstellung T ist in einem zweiten Abstand 82 zum Feldboden 80 angeordnet. Sichtbar ist, dass der erste Abstand 81 der Mulcheinheit 3 in der Feldstellung F kleiner als der zweite Abstand 82 der Mulcheinheit 3 in der Transportstellung T ist. Zudem sind die Anordnungen der Mulcheinheiten 3 im Raum in der Feldstellung F und in der Transportstellung T verschieden. Dies wird im Rahmen der Fig. 5 erläutert.

Fig. 3 zeigt eine Befestigungskonsole 13 sowie einen Ausschnitt aus der Mulcheinheit 3 des Erntevorsatzgerätes 1, der die Abdeckung 19 Getriebe 7 sowie Teile eines tragenden Mulcherrahmens 18 der Mulcheinheit 3 zeigt. Die Abdeckung 19 kann als Blech ausgebildet sein. Sie ist an dem Mulcherrahmen 18 befestigt. Zudem ist oberseitig der Abdeckung 19 das Getriebe 7 angeordnet. Die Getriebewelle 70 durchsetzt das Getriebe 7. Sie erstreckt sich in Richtung einer Getriebeachse IV, um die sie drehbar ist.

Die Mulcheinheit 3 ist mittels der Befestigungskonsole 13 am Rahmen 5 des Erntevorsatzgerätes 1 befestigt. Die Befestigungskonsole 13 ist ortsfest am Rahmen 5 des Erntevorsatzgerätes 1 befestigt. Dafür umfasst sie einen feststehenden Konsolenteil 131. Der feststehende Konsolenteil 131 ist hier u- förmig ausgebildet. Er weist zwei voneinander beabstandete Schenkel 17 auf, die durch einen Querverbinder 28 miteinander verbunden sind. Es ist weiterhin mittels des Querverbinders 28 lösbar am Rahmen 5 befestigt, hier beispielhaft mittels Schrauben (nicht bezeichnet). Dadurch sind die Mulcheinheit 3 und die Befestigungskonsole 13 beispielsweise zu Wartungszwecken von dem Erntevorsatzgerät 1 abbaubar, oder nur im Bedarfsfall an dieses anbaubar.

Weiterhin umfasst die Befestigungskonsole 13 einen schwenkbaren Konsolenteil 132. Die Mulcheinheit 3 ist um die erste Schwenkachse I in und gegen eine erste Schwenkrichtung 30 schwenkbar vorgesehen. Dafür umfasst die Mulcheinheit 3 den Mulcherrahmen 18, mit dem sie an dem schwenkbaren Konsolenteil 132 gelagert ist. Die erste Schwenkachse I durchsetzt den Mulcherrahmen 18 sowie den schwenkbaren Konsolenteil 132.

Der schwenkbare Konsolenteil 132 ist weiterhin um eine zweite Schwenkachse II in und gegen eine zweite Schwenkrichtung 33 schwenkbar am feststehenden Konsolenteil 131 gelagert, insbesondere an den Schenkeln 17 des feststehenden Konsolenteils 131. Dabei ist die zweite Schwenkachse II von der ersten Schwenkachse I beabstandet. Dafür umfasst der schwenkbare Konsolenteil 132 hier zwei Schwenkarme (nicht bezeichnet), die voneinander, insbesondere in Querrichtung 93, beabstandet sind, so dass sie jeweils nahe eines der Schenkel 17 angeordnet sind. Die zweite Schwenkachse II durchsetzt den feststehenden Konsolenteil 131 sowie den schwenkbaren Konsolenteil 132, insbesondere die Schenkel 17 sowie die Schwenkarme.

Der schwenkbare Konsolenteil 132 wird beim Schwenken um die zweite Schwenkachse II relativ zum feststehenden Konsolenteil 131 und zum Rahmen 5 verschwenkt. Da die erste Schwenkachse I den schwenkbaren Konsolenteil 132 durchsetzt und die Mulcheinheit 3 um die erste Schwenkachse I schwenkbar an dem schwenkbaren Konsolenteil 132 gelagert ist, werden beim Schwenken des schwenkbaren Konsolenteils 132 um die zweite Schwenkachse II die Mulcheinheit 3 und mit ihr die erste Schwenkachse I um die zweite Schwenkachse II verschwenkt.

Zum automatischen Verschwenken der Mulcheinheit 3 ist der Schwenkaktor 6 vorgesehen. Er ist einenends um die zweite Schwenkachse II drehbar an dem feststehenden Konsolenteil 131 gelagert. Weiterhin ist er anderenends um eine Anlenkachse V (s. Fig. 4 (a) und Fig. 5 (b)) drehbar an der Mulcheinheit 3 gelagert, hier am Mulcherrahmen 18.

Beim Schwenken des schwenkbaren Konsolenteils 132 um die zweite Schwenkachse II kann die Mulcheinheit 3 gleichzeitig relativ zum Rahmen 5 um die erste Schwenkachse I verschwenkt werden. Dabei ändern sich nicht nur ein Schwenkwinkel 84, um den die Mulcheinheit 3 um die erste Schwenkachse I verschwenkt wird, sondern auch ein Schwenkradius 83, das heißt ein Abstand der Mulcheinheit 3 vom Rahmen 5.

In der Erntestellung E ist der schwenkbare Konsolenteil 132 am Rahmen 5 festgelegt. Dadurch kann er nicht um die zweite Schwenkachse II geschwenkt werden. Dies zeigen die Fig. 5 (a) und (b). Zum Festlegen des schwenkbaren Konsolenteils 132 weist das Erntevorsatzgerät 1 eine Verbindungsanordnung 12 auf (s. Fig. 4 (b) sowie 5 (a) - (e)). Der Schwenkradius 83 ist dann konstant.

Zum Überführen der Mulcheinheit 3 in die Transportstellung T kann die Verbindungsanordnung 12 hingegen gelöst werden. Dies zeigt Fig. 5 (c).

Danach ist der schwenkbare Konsolenteil 132 um die zweite Schwenkachse II verschwenkbar. Dies zeigen die Fig. 5 (d) - (f).

Um ein kontrolliertes Verschwenken der Mulcheinheit 3 an eine definierte Position im Raum bei gelöster Verbindungsanordnung 12 sicherzustellen, weist die Mulcheinheit 3 ein Lenkmittel 20 auf. Die Wirkung des Lenkmittels 20 wird im Rahmen der Fig. 5 (d) - (f) beschrieben.

Um das Verschwenken der Mulcheinheit 3 bei gelöster Verbindungsanordnung 12 zu begrenzen, weist die Befestigungsanordnung 13 zudem einen Anschlag 16 auf. Der Anschlag ist hier durch einen Steg gebildet, welcher den feststehenden Konsolenteil 131, hier die Schenkel 17, durchsetzt. Bei gelöster Verbindungsanordnung 12 ist die Mulcheinheit 3 solange um die zweite Schwenkachse II schwenkbar, bis Gegenanschläge 15 am Anschlag 16 anschlagen. Die Gegenanschläge 15 sind hier durch Anformungen an den Schwenkarmen des schwenkbaren Konsolenteils 132 gebildet.

Fig. 4 zeigt in (a) und (b) jeweils die Mulcheinheit 3 und ihre Anbindung an einen Rahmen 5 des Erntevorsatzgerätes 1 in verschiedenen perspektivischen Ansichten. Die Darstellungen zeigen die Mulcheinheit 3 jeweils in der Erntestellung E, in der diese auf dem Feldboden 80 aufliegt. Der Schwenkaktor 6 befindet sich in der Erntestellung E der Mulcheinheit 3 in einem teilausgefahrenen Erntezustand J. Dabei ist er nicht druckbelastet, so dass die Mulcheinheit 3 frei um die erste Schwenkachse I schwenkbar ist, damit sie Bodenunebenheiten folgen kann.

Zur Bearbeitung der Pflanzenstängel weist die Mulcheinheit 3 das Bearbeitungswerkzeug 4 auf. Das Bearbeitungswerkzeug 4 ist in Fig. 4 (b) gezeigt. Es ist in Hochrichtung 92 gesehen unterhalb der Abdeckung 19 angeordnet. Weiterhin ist es an einen werkzeugseitigen Abtrieb (nicht gezeigt) des Getriebes 7 drehfest befestigt, beispielsweise angeschraubt, so dass es sich bei Antrieb des Getriebes 7 um eine Abtriebsachse III des Abtriebs dreht. Die Abtriebsachse III des Bearbeitungswerkzeugs 4 ist hier quer zur Getriebewelle IV des Getriebes 7 ausgerichtet.

Das Bearbeitungswerkzeug 4 weist, insbesondere um eine Unwucht zu vermeiden, eine Mehrzahl baugleicher Schlagkörper 41 auf, die um die Abtriebsachse III gleichmäßig verteilt angeordnet sind. Hier ist eine Ausführungsform mit zwei Schlagkörpern 41 dargestellt. Es können jedoch auch drei oder mehr Schlagkörper 41 verwendet werden. Zudem können anstelle der Schlagkörper 41 auch Messer vorgesehen sein. Die Schlagkörper 41 sind dazu vorgesehen, die Pflanzenstängel im Feldboden zu zerschlagen.

In Fig. 4 (b) ist die Verriegelungsanordnung 12 sichtbar, mit der hier der schwenkbare Konsolenteil 132 am Rahmen 5 des Erntevorsatzgerätes 1 festgelegt ist. Der schwenkbare Konsolenteil 132 weist einen Haltewinkel 10 auf, in dem ein Verriegelungsmittel 121 angeordnet ist. Das Verriegelungsmittel 121 ist hier als eine Durchgangsbohrung ausgebildet. Im Folgenden werden die Begriffe Verriegelungsmittel 121 und Durchgangsbohrung synonym verwendet.

Die Durchgangsbohrung 121 wirkt mit einem Verriegelungsgegenmittel 122 (s. Fig. 5 (a) - (e)) zusammen, das im Rahmen 5 angeordnet ist. Der Rahmen 5 weist hier dafür ein Vierkantrohr auf. Im Folgenden werden die Begriffe Rahmen 5 und Vierkantrohr synonym verwendet. Das Verriegelungsgegenmittel 122 ist hier ein Zapfen, der die Durchgangsbohrung 121 in einem verriegelten Zustand Z1 durchsetzt. Die Begriffe Verriegelungsgegenmittel 122 und Zapfen werden im Folgenden synonym verwendet. Dabei wird der Zapfen 122 gegen die Kraft einer Feder (nicht gezeigt) in die Durchgangsbohrung 121 gedrückt.

Zum Lösen der Verriegelungsanordnung 12 weist diese eine Betätigungsstrebe 21 auf, die sich in eine Längsrichtung (nicht bezeichnet) des Vierkantrohrs 5 erstreckt, und an der eine Rampe (nicht gezeigt) angeordnet ist. Durch Verschieben der Betätigungsstrebe 21 wird die Rampe verschoben, so dass der Zapfen 122 mit der Kraft der Feder aus der Durchgangsbohrung 121 gezogen wird. Die

Verriegelungsanordnung 12 befindet sich dann in einem gelösten Zustand Z2 (s. Fig. 5 (c) - (f)). Im gelösten Zustand Z2 ist der Haltewinkel 10 vom Rahmen 5 abnehmbar. Der schwenkbewegliche Konsolenteil 131 kann dann um die zweite Schwenkachse II verschwenken.

Das Verschieben der Betätigungsstrebe 21 ist hier durch einen Pfeil, der sich in eine Schieberichtung 35 erstreckt, schematisch dargestellt. Zum Verschieben der Betätigungsstrebe 21 kann ein Betätigungsaktor (nicht gezeigt) vorgesehen sein. Dabei ist hier für jeweils zwei der Mulcheinheiten 3 jeweils ein Betätigungsaktor zum Lösen ihrer schwenkbaren Konsolenteile 132 vom Rahmen 5 vorgesehen.

Prinzipiell kann auch jede der Mulcheinheiten 3 des Erntevorsatzgerätes 1 separat anheb- und absenkbar vorgesehen sein, so dass für jede der Mulcheinheiten 3 jeweils ein Betätigungsaktor erforderlich ist. Um Kosten und Aufwand zu sparen, sind die Mulcheinheiten 3 aber gruppenweise zusammengefasst.

Die Fig. 5 in (a) - (e) zeigen jeweils ein Schnittbild durch die Mulcheinheit 3 der Fig. 4 in verschiedenen Stellungen E, F, T und in Fig. 5 (f) eine weitere perspektivische Ansicht der Mulcheinheit 3 der Fig. 4.

Fig. 5 (a) zeigt die Mulcheinheit 3 in de Feldstellung F. In der Feldstellung F ist die Mulcheinheit 3 gegenüber der Erntestellung E, die Fig. 5 (b) zeigt, angehoben. Der Schwenkaktor 6 ist in der Feldstellung eingezogen.

Das Erntevorsatzgerät 1 befindet sich während des Erntebetriebs in der Ernteanordnung EA, das heißt, es ist in Querrichtung 93 ausgerichtet und wird in Fahrtrichtung 91 bodenkopierend über den Feldboden 80 geführt.

Der schwenkbare Konsolenteil 132 der Befestigungskonsole 13 ist mit dem Haltewinkel 10 am Vierkantrohr 5 festgelegt, so dass sich die Verbindungsanordnung 12 im verriegelten Zustand Z1 befindet. Dabei durchsetzt der Zapfen 122 die Durchgangsbohrung 121. In der Erntestellung E und in der Feldstellung F ist die Mulcheinheit 3 daher nur um die erste Schwenkachse I schwenkbar.

In der Ernteanordnung EA liegt die Mulcheinheit 3 auf dem Feldboden 80 auf, und der Schwenkaktor 6 ist nicht druckbelastet. Dadurch kann der Schwenkaktor 6 frei ein und ausgefahren werden. Die Mulcheinheit 3 schwenkt dabei zwischen der Erntestellung E und der angehobenen Feldstellung F hin und her. Der Schwenkaktor 6 befindet sich dann in einem teilausgefahrenen Erntezustand J oder in der Feldstellung F der Mulcheinheit 3 im eingefahrenen Feldzustand K.

Beim Anheben der Mulcheinheit 3 wird diese in die erste Schwenkrichtung 30 verschwenkt, wobei sie angehoben wird, so dass sie in der Feldstellung F im ersten Abstand 81 vom Feldboden 80 beabstandet ist. Da der schwenkbare Konsolenteil 132 am Rahmen 5 festgelegt ist, ändert sich dabei lediglich der Schwenkwinkel 84 um die erste Schwenkachse I, während der Schwenkradius 83 (s. Fig. 5 (e)) sich nicht ändert.

In Fig. 5 (c) ist die Mulcheinheit 3 noch in der Erntestellung E angeordnet. Die Verbindungsanordnung 12 ist jedoch bereits gelöst, so dass sie sich im entriegelten Zustand Z2 befindet und der Zapfen 122 die Durchgangsbohrung 121 nicht mehr durchsetzt. Dadurch ist der schwenkbare Konsolenteil 132 um die zweite Schwenkachse II relativ zum feststehenden Konsolenteil 131 schwenkbar.

Fig. 5 (d) zeigt die Mulcheinheit 3 in einer Zwischenstellung (nicht bezeichnet) beim Verschwenken um die zweite Schwenkachse II in eine zweite Schwenkrichtung 33.

Das Lenkmittel 20 erstreckt sich zwischen dem feststehenden Konsolenteil 131 und der Mulcheinheit 3. Dabei ist es einenends räumlich versetzt zur zweiten Schwenkachse II am feststehenden Konsolenteil 131 befestigt, und anderenends räumlich versetzt zur Anlenkachse V am Mulcherrahmen 18. Es ist als Zugseil ausgebildet und weist eine konstante Länge auf. Aufgrund seiner konstanten Länge lenkt das Lenkmittel 20 die Mulcheinheit 3 beim Verschwenken um die zweite Schwenkachse II in die Transportstellung T.

Beim Ausfahren des Schwenkaktors 6 wird die Mulcheinheit 3 angehoben. Eine Längenänderung des Schwenkaktors 6 wird dabei durch Schwenken der Mulcheinheit 3 um die erste Schwenkachse I in die erste Schwenkrichtung 30, und durch Schwenken des schwenkbaren Konsolenteils 132 um die zweite Schwenkachse II in die zweite Schwenkrichtung 33 ausgeglichen. Der schwenkbare Konsolenteil 132 wird dabei in Richtung zum Schwenkaktor 6 hin gezogen. Die erste Schwenkachse I bewegt sich dadurch in Richtung zum Schwenkaktor 6.

Die Mulcheinheit 3 ist solange um die zweite Schwenkachse II verschwenkbar, bis die am schwenkbaren Konsolenteil 132 angeordnete Anformung 15 am Anschlag 16 anliegt. Die Mulcheinheit 3 befindet sich dann in der Transportstellung T. Der Schwenkaktor 6 befindet sich dann in einem weit oder ganz ausgefahrenen Transportzustand L. Dies zeigen die Fig. 5 (e) und (f).

Beim Verschwenken des schwenkbaren Konsolenteils 132 um die zweite Schwenkachse II wird die Mulcheinheit 3 vom Rahmen 5 weggeschwenkt. Dadurch ändert sich der Schwenkradius 83 der Mulcheinheit 3, das heißt ihr Abstand vom Rahmen 5, beim Verschwenken von der Erntestellung E in die Transportstellung T.

Zudem wird die Mulcheinheit 3 dabei um einen größeren Schwenkwinkel 84 um die erste Schwenkachse I verschwenkt, als beim Verschwenken von der Erntestellung E in die Feldstellung F. Wenn die Mulcheinheit 3 in der Ernteanordnung EA des Erntevorsatzgerätes 1 von der Erntestellung E in die Transportstellung T verschwenkt wird, führt dies daher zu einem größeren zweiten Abstand 82 der Mulcheinheit 3 vom Feldboden 80, als in der Feldstellung F.

Die größere Veränderung des Schwenkwinkels 84 und die Veränderung des Schwenkradius 83 führt zu einer Anordnung der Mulcheinheit 3 im Raum, durch die ein Sichtfeld 50 eines die Erntemaschine 100 führenden Fahrers (nicht gezeigt) in der Transportanordnung TA nur sehr geringfügig oder sogar gar nicht eingeschränkt ist. Dies zeigt Fig. 6.

Fig. 6 zeigt in (a) und (b) jeweils einen Ausschnitt aus der Erntemaschine 100, an der frontseitig das Erntevorsatzgerät 1 der Fig. 1 angebaut ist, in einer Ansicht von oben. Das Erntevorsatzgerät 1 befindet sich in einer Transportanordnung TA, in der die Bearbeitungsabschnitte A und B sich in der aufgerichteten Stellung befinden. Dadurch überschreitet die Erntemaschine 100 mit dem Erntevorsatzgerät 1 die zulässigen Ausmaße im Straßenbetrieb nicht.

Jedoch ist das Sichtfeld 50 des Fahrers durch die aufgerichteten Bearbeitungsabschnitte A, B des Erntevorsatzgerätes 1 eingeschränkt. Das Sichtfeld 50 ist hier durch einen Kreis um eine angenommene Augenposition 51 des Fahrers schematisch dargestellt.

In den Fig. 6 (a) und (b) ist eine Mulcheinheit 3 beispielhaft jeweils am rechten Bearbeitungsabschnitt B dargestellt. Dabei ist die Mulcheinheit 3 in Fig. 6 (a) in die weniger angehobene Feldstellung F verstellt, und in Fig. 6 (b) in die Transportstellung T. Das eingeschränkte Sichtfeld 50 ist durch Linien (nicht bezeichnet) schematisch verdeutlicht, die sich in eine Blickrichtung des Fahrers erstrecken, und äußere Ecken (nicht bezeichnet) des mit der Mulcheinheit 3 ausgestatteten Bearbeitungsabschnitts B auf Augenhöhe des Fahrers tangieren.

Sichtbar ist, dass eine Einschränkung 55 des Sichtfeldes 50 durch die in der Feldstellung F angeordnete Mulcheinheit 3 größer ist, als durch die in der Transportstellung T angeordnete Mulcheinheit 3. Der Schwenkwinkel 84 der in der Transportstellung T angeordneten Mulcheinheit 3 erstreckt sich etwa in Blickrichtung des Fahrers. Zudem ist die Mulcheinheit 3 in der Transportstellung T so angeordnet, dass sie innerhalb eines durch Komponenten (nicht bezeichnet) des Erntevorsatzgerätes 1 begrenzten Raumes (nicht bezeichnet) liegt, durch die das Sichtfeld des Fahrers auch ohne die Mulcheinheit 3 eingeschränkt wäre. In der Transportstellung T beschränkt die Mulcheinheit 3 das Sichtfeld des Fahrers daher nicht weiter, als es durch das Erntevorsatzgerät 1 ohne die Mulcheinheit 3 beschränkt ist.

## Patentansprüche

1. Erntevorsatzgerät (1) zum frontseitigen Anbau an eine Erntemaschine (100), mit einem Rahmen (5), an dem eine Schneid- und/oder Fördereinrichtung (2) zum Ernten von stängelartigem Erntegut angeordnet ist, und mit einer Mulcheinheit (3),
• die der Schneid- und/oder Fördereinrichtung (2) in einer Gutflussrichtung (99) nachgeordnet ist,
• die ein um eine Antriebsachse (III) rotierend antreibbares Bearbeitungswerkzeug (4) zum Bearbeiten von bei der Ernte in einem Feldboden verbleibenden Pflanzenstängeln aufweist,
• die sich in einer Ernteanordnung (EA) des Erntevorsatzgerätes (1) in einer Erntestellung (E) auf dem Feldboden abstützt, und
• die um eine erste Schwenkachse (I) relativ zum Rahmen (5) schwenkbar gelagert ist, so dass sie reversibel von der Erntestellung (E) ausgehend bis in eine gegenüber der Erntestellung (E) angehobene Feldstellung (F) schwenkbar ist,
**dadurch gekennzeichnet, dass**
die erste Schwenkachse (I) zum Verstellen der Mulcheinheit (3) von der Erntestellung (E) in eine angehobene Transportstellung (T) um eine zweite Schwenkachse (II) relativ zum Rahmen (5) schwenkbar vorgesehen ist.

2. Erntevorsatzgerät (1) nach Anspruch 1, **dadurch gekennzeichnet, dass** die Mulcheinheit (3) einen Schwenkaktor (6) zum Verschwenken der Mulcheinheit (3) von der Erntestellung (E) in die Transportstellung (T) aufweist.

3. Erntevorsatzgerät (1) nach einem der vorherigen Ansprüche, **dadurch gekennzeichnet, dass** der Schwenkaktor (6)
• durch Einfahren von einem teilausgefahrenen Erntezustand (J) in der Erntestellung (E) der Mulcheinheit (3) in einen Feldzustand (K) verstellbar ist, in der die Mulcheinheit (3) gegenüber der Erntestellung (E) in die angehobene Feldstellung (F) verschwenkt, und der Schwenkaktor (6) gegenüber dem Erntezustand (J) eingefahren ist, und
• durch Ausfahren von dem teilausgefahrenen Erntezustand (J) in der Erntestellung (E) der Mulcheinheit (3) in einen Transportzustand (L) verstellbar ist, in der die Mulcheinheit (3) gegenüber der Erntestellung (E) in eine Transportstellung (T) verschwenkt, und der Schwenkaktor gegenüber dem Erntezustand ausgefahren ist,
wobei ein Abstand der Mulcheinheit (3) von einem Feldboden in der Transportstellung (T) größer als in der Feldstellung (F) ist.

4. Erntevorsatzgerät (1) nach einem der vorherigen Ansprüche, **dadurch gekennzeichnet, dass** es eine Befestigungskonsole (13) aufweist, mit der die Mulcheinheit (3) am Rahmen (5) des Erntevorsatzgerätes (1) befestigt ist, wobei die Befestigungskonsole (13) einen feststehenden Konsolenteil (131), der ortsfest am Rahmen (5) angeordnet ist, und einen schwenkbaren Konsolenteil (132) umfasst, der relativ zum feststehenden Konsolenteil (131) um die zweite Schwenkachse (II) schwenkbar am feststehenden Konsolenteil (131) gelagert ist.

5. Erntevorsatzgerät (1) nach einem der vorherigen Ansprüche, **dadurch gekennzeichnet, dass** der Schwenkaktor (6) einenends um die zweite Schwenkachse (II) drehbar an dem feststehenden Konsolenteil (131), und anderenends um eine Anlenkachse (V) drehbar an der Mulcheinheit (3), insbesondere an einem Mulcherrahmen (18), angelenkt ist.

6. Erntevorsatzgerät (1) nach einem der vorherigen Ansprüche, **dadurch gekennzeichnet, dass** es eine Verbindungsanordnung aufweist, mit der der schwenkbare Konsolenteil (132) am Rahmen (5) festlegbar ist.

7. Erntevorsatzgerät (1) nach einem der vorherigen Ansprüche, **dadurch gekennzeichnet, dass** die Verbindungsanordnung (12) in der Transportstellung (T) gelöst ist, so dass der schwenkbare Konsolenteil (132) und/oder die Mulcheinheit (3) um die zweite Schwenkachse (II) schwenkbar sind.

8. Erntevorsatzgerät (1) nach einem der vorherigen Ansprüche, **dadurch gekennzeichnet, dass** die Mulcheinheit (3) ein Lenkmittel (20) umfasst, das sich zwischen dem feststehenden Konsolenteil (131) und der Mulcheinheit (3) erstreckt, und dass die Mulcheinheit (3) bei gelöster Verbindungsanordnung (12) während des Ausfahrens des Schwenkaktors (6) in die Transportstellung (T) lenkt.

9. Erntevorsatzgerät (1) nach einem der vorherigen Ansprüche, **dadurch gekennzeichnet, dass** das Lenkmittel (20) einenends zur zweiten Schwenkachse (II) räumlich versetzt an dem feststehenden Konsolenteil (131), und anderenends zur Anlenkachse (V) räumlich versetzt an der Mulcheinheit (3), insbesondere am Mulcherrahmen (18), befestigt ist.

10. Erntevorsatzgerät (1) nach einem der vorherigen Ansprüche, **dadurch gekennzeichnet, dass** die Verbindungsanordnung (12) ein Verbindungsmittel (121) und ein Verbindungsgegenmittel (122) aufweist, sowie einen Betätigungsaktor zum automatischen Verbinden des Verbindungsmittels (121) und das Verbindungsgegenmittels (122) miteinander und Lösen voneinander.

11. Erntevorsatzgerät (1) nach einem der vorherigen Ansprüche, **dadurch gekennzeichnet, dass** es wenigstens zwei Bearbeitungsabschnitte (A, B) umfasst, wobei es von einer Ernteanordnung (EA), in der sich die Bearbeitungsabschnitte (A, B) in eine Querrichtung (93) erstrecken, in eine Transportanordnung (TA) verstellbar ist, in der die Bearbeitungsabschnitte (A, B) gegenüber der Ernteanordnung (EA) verstellt sind, wobei an jedem der Bearbeitungsabschnitte (A, B) mindestens eine Mulcheinheit (3) angeordnet ist.

12. Erntemaschine mit einem Erntevorsatzgerät (1) nach einem der vorherigen Ansprüche.

13. Erntemaschine nach Anspruch 12, **dadurch gekennzeichnet, dass** sie eine Steuerungseinheit (11) umfasst, die dazu eingerichtet ist, die Mulcheinheit (3) automatisch, insbesondere beim Überführen des Erntevorsatzgerätes (1) von der Ernteanordnung (EA) in die Transportanordnung (A), von der Erntestellung (E) in die Transportstellung (T) zu verschwenken.

14. Verfahren zum Überführen eines Erntevorsatzgerätes (1) nach einem der Ansprüche 1 - 12 von einer Ernteanordnung (EA) in eine Transportanordnung (TA), bei dem Bearbeitungsabschnitte (A, B) des Erntevorsatzgerätes (1) von einer Querstellung, in der sie sich in eine Querrichtung (93) erstrecken, in eine Hochstellung verstellt werden, in der sie relativ zur Querstellung aufgerichtet sind, wobei während des Überführens des Erntevorsatzgerätes (1) von der Ernteanordnung (EA) in die Transportanordnung (TA) zunächst eine Verbindungsanordnung (12) des Erntevorsatzgerätes (1)gelöst wird, so dass die Mulcheinheit (3) um eine zweite Schwenkachse (II) schwenkbar ist, und die Mulcheinheit (3) dann von der Erntestellung (E) in die Transportstellung (T) verschwenkt wird.

## Claims

1. Harvesting attachment (1) for frontal attachment to a harvesting machine (100), comprising a frame (5) on which a cutting and/or conveying device (2) for harvesting stalk-like crops is arranged, and comprising a mulching unit (3),
• which is arranged downstream of the cutting and/or conveying device (2) in a crop flow direction (99),
• which has a processing tool (4) which can be driven so as to rotate about a drive axis (III) for processing plant stems remaining in field soil during harvesting,
• which is supported on the field soil in a harvesting position (E) in a harvesting arrangement (EA) of the harvesting attachment (1), and
• which is mounted so as to be pivotable about a first pivot axis (I) relative to the frame (5), so that it can be pivoted reversibly from the harvesting position (E) to a field position (F) that is raised relative to the harvesting position (E),
**characterized in that**
the first pivot axis (I) is provided for adjusting the mulching unit (3) from the harvesting position (E) to a raised transport position (T) so as to be pivotable about a second pivot axis (II) relative to the frame (5).

2. Harvesting attachment (1) according to claim 1, **characterized in that** the mulching unit (3) has a swivel actuator (6) for swiveling the mulching unit (3) from the harvesting position (E) into the transport position (T).

3. Harvesting attachment (1) according to either of the preceding claims, **characterized in that** the swivel actuator (6)
• can be adjusted by retracting from a partially extended harvesting state (J) in the harvesting position (E) of the mulching unit (3) into a field state (K), in which the mulching unit (3) swivels into the raised field position (F) relative to the harvesting position (E), and the swivel actuator (6) is retracted relative to the harvesting state (J), and
• can be adjusted by extending from the partially extended harvesting state (J) in the harvesting position (E) of the mulching unit (3) into a transport state (L), in which the mulching unit (3) swivels into a transport position (T) relative to the harvesting position (E), and the swivel actuator is extended relative to the harvesting state,
a distance of the mulching unit (3) from field soil being greater in the transport position (T) than in the field position (F).

4. Harvesting attachment (1) according to any of the preceding claims, **characterized in that** it has a fastening bracket (13) with which the mulching unit (3) is fastened to the frame (5) of the harvesting attachment (1), the fastening bracket (13) comprising a fixed bracket part (131) which is arranged in a fixed position on the frame (5) and a pivotable bracket part (132) which is mounted on the fixed bracket part (131) so as to be pivotable about the second pivot axis (II) relative to the fixed bracket part (131).

5. Harvesting attachment (1) according to any of the preceding claims , **characterized in that** the swivel actuator (6) is hinged at one end to the fixed bracket part (131) so as to be rotatable about the second pivot axis (II), and hinged at the other end to the mulching unit (3), in particular to a mulcher frame (18) so as to be rotatable about a hinge axis (V).

6. Harvesting attachment (1) according to any of the preceding claims, **characterized in that** it has a connecting arrangement with which the pivotable bracket part (132) can be secured to the frame (5).

7. Harvesting attachment (1) according to any of the preceding claims, **characterized in that** the connecting arrangement (12) is released in the transport position (T), so that the pivotable bracket part (132) and/or the mulching unit (3) can be pivoted about the second pivot axis (II).

8. Harvesting attachment (1) according to any of the preceding claims, **characterized in that** the mulching unit (3) comprises a steering means (20) which extends between the fixed bracket part (131) and the mulching unit (3) and that the mulching unit (3) steers into the transport position (T) when the connecting arrangement (12) is released during the extension of the swivel actuator (6).

9. Harvesting attachment (1) according to any of the preceding claims, **characterized in that** the steering means (20) is fastened at one end to the fixed bracket part (131) so as to be spatially offset from the second pivot axis (II), and is fastened at the other end to the mulching unit (3), in particular to the mulcher frame (18), so as to be spatially offset from the hinge axis (V).

10. Harvesting attachment (1) according to any of the preceding claims, **characterized in that** the connecting arrangement (12) has a connecting means (121) and a connecting counter-means (122), and an operating actuator for automatically interconnecting the connecting means (121) and the connecting counter-means (122) and releasing them from one another.

11. Harvesting attachment (1) according to any of the preceding claims, **characterized in that** it comprises at least two processing portions (A, B), the harvesting attachment being able to be adjusted from a harvesting arrangement (EA), in which the processing portions (A, B) extend in a transverse direction (93), to a transport arrangement (TA), in which the processing portions (A, B) are adjusted relative to the harvesting arrangement (EA), at least one mulching unit (3) being arranged on each of the processing portions (A, B).

12. Harvesting machine having a harvesting attachment (1) according to any of the preceding claims.

13. Harvesting machine according to claim 12, **characterized in that** it comprises a control unit (11) which is designed to swivel the mulching unit (3) automatically from the harvesting position (E) to the transport position (T), in particular when the harvesting attachment (1) is transferred from the harvesting arrangement (EA) to the transport arrangement (A).

14. Method for transferring a harvesting attachment (1) according to any of claims 1-12 from a harvesting arrangement (EA) to a transport arrangement (TA), in which method processing portions (A, B) of the harvesting attachment (1) are adjusted from a transverse position, in which they extend in a transverse direction (93), to an elevated position, in which they are upright relative to the transverse position, a connecting arrangement (12) of the harvesting attachment (1) being initially released during the transfer of the harvesting attachment (1) from the harvesting arrangement (EA) to the transport arrangement (TA), so that the mulching unit (3) can be pivoted about a second pivot axis (II), and the mulching unit (3) then being swiveled from the harvesting position (E) to the transport position (T).

## Revendications

1. Tête de récolte (1) pour le montage frontal à une machine de récolte (100) comprenant un châssis (5) avec une installation de coupe et/ou de transfert (2) pour récolter des produits en tige et une unité de paillage (3),
* l'installation de coupe et/ou de transfert (2) est installée en aval dans la direction du flux de produit (99),
* elle comporte un outil (4) entraîné en rotation autour d'un axe d'entraînement (III) pour travailler les résidus des tiges qui restent sur le sol après une récolte,
* qui s'appuie sur le sol dans la disposition de récolte (EA) de la tête de récolte (1) dans une position de récolte (E), et
* qui est montée pivotante autour d'un premier axe de pivotement (I) par rapport au châssis (5) de façon à pouvoir pivoter de manière réversible à partir de la position de récolte (E) dans une position de champ (F), relevée par rapport à la position de récolte (E),
tête de récolte **caractérisée en ce que**
le premier axe de pivotement (I) est basculant relevée autour d'un second axe de pivotement (II) par rapport au châssis (5) pour déplacer l'unité de paillage (3) de la position de récolte (E) dans une position de transport (T).

2. Tête de récolte (1) selon la revendication 1,
**caractérisée en ce que**
l'unité de paillage (3) a un actionneur de pivotement (6) pour pivoter l'unité de paillage (3) de la position de récolte (E) à la position de transport (T).

3. Tête de récolte (1) selon l'une des revendications précédentes,
**caractérisée en ce que**
l'actionneur de pivotement (6) peut être rétracté à partir d'un état de récolte (J) partiellement déployé, à la position de récolte (E) de l'unité de paillage (3) dans un état de champ (K) dans lequel l'unité de paillage (3) est déplacée par rapport à la position de récolte (E) dans la position relevée de champ (F) et l'actionneur de pivotement (6) est rentré par rapport à l'état de récolte (J), et
* par le déploiement de l'état de récolte (J) partiellement déployé à la position de récolte (E) de l'unité de paillage (3) dans l'état de transport (L) dans lequel l'unité de paillage (3) est pivotée par rapport à la position de récolte (E) dans la position de transport (T) et l'actionneur de pivotement est déployé par rapport à l'état de récolte,
- la distance entre l'unité de paillage (3) et le sol du champ dans la position de transport (T) est plus grande que dans la position de champ (F).

4. Tête de récolte (1) selon l'une des revendications précédentes,
**caractérisée en ce que**
elle comporte une console de fixation (13) par laquelle l'unité de paillage (3) est fixée au châssis (5) de la tête de récolte (1),
- la console de fixation (13) ayant une partie fixe de console (131), qui est installée de manière fixe sur le châssis (5) et une partie pivotante de console (132) qui est montée pivotante par rapport à la partie fixe de console (131) autour du second axe de pivotement (II) à la partie fixe de console (131).

5. Tête de récolte (1) selon l'une des revendications précédentes, **caractérisée en ce que**
l'actionneur de pivotement (6) est détaché à une extrémité autour du second axe de pivotement (II) de manière à tourner sur la partie de console fixe (131) et à l'autre extrémité autour d'un axe d'articulation (V) elle est en rotation sur l'unité de paillage (3) notamment sur le châssis de paillage (18).

6. Tête de récolte (1) selon l'une des revendications précédentes, **caractérisée en ce que**
elle comprend un dispositif de liaison par lequel la partie pivotante de console (132) est fixée au châssis (5).

7. Tête de récolte (1) selon l'une des revendications précédentes, **caractérisée en ce que**
le dispositif de liaison (12) est libéré en position de transport (T) de façon que la partie de console pivotante (132) et/ou l'unité de paillage (3) soient pivotantes autour du second axe de pivotement (II).

8. Tête de récolte (1) selon l'une des revendications précédentes, **caractérisée en ce que**
l'unité de paillage (3) comprend un moyen de guidage (20) entre la partie fixe de console (131) et l'unité de paillage (3), et
- l'unité de paillage (3) lorsque le dispositif de liaison est libéré (12) est guidée pendant le déploiement de l'actionneur de pivotement (6) dans la position de transport (T).

9. Tête de récolte (1) selon l'une des revendications précédentes, **caractérisée en ce que**
le moyen de guidage (20) est décalé dans l'espace, à une extrémité, par rapport au second axe de pivotement (II) sur la partie fixe de console (131) et à l'autre extrémité il est fixé décalé dans l'espace, à l'axe d'articulation (V), à l'unité de paillage (3), notamment au châssis de paillage (18).

10. Tête de récolte (1) selon l'une des revendications précédentes, **caractérisée en ce que**
le dispositif de liaison (12) comporte un moyen de liaison (121) et un moyen de liaison complémentaire (122) ainsi qu'un actionneur de manœuvre pour relier automatiquement le moyen de liaison (121) et le moyen de liaison complémentaire (122) l'un à l'autre et de manière détachable.

11. Tête de récolte (1) selon l'une des revendications précédentes, **caractérisée en ce que**
elle comprend au moins deux segments de travail (A,B) et en étant mobile à partir d'une disposition de récolte (EA) dans laquelle les segments de travail (A,B) sont dans la direction transversale (93), vers une position de transport (TA) dans laquelle les segments de travail (A,B) sont déplacés par rapport à la disposition de récolte (EA),
* chacun des segments de travail (A,B) ayant au moins une unité de paillage (3).

12. Machine de récolte comportant une tête de récolte (1) selon l'une des revendications précédentes.

13. Machine de récolte selon la revendication 12,
**caractérisée en ce qu'**elle comprend
une unité de commande (11) pour basculer l'unité de paillage (3) automatiquement à partir de la position de récolte (E) dans la position de transport (T) notamment lors du passage de la tête de récolte (1) de la position de récolte (EA) dans la position de transport (A).

14. Procédé pour faire passer une tête de récolte (1) selon l'une des revendications 1 à 12 d'une disposition de récolte (EA) dans une disposition de transport (TA), selon lequel les segments de travail (A,B) de la tête de récolte (1) sont déplacés d'une position transversale dans laquelle ils s'étendent dans la direction transversale (93) dans une position haute dans laquelle ils sont orientés par rapport à la position transversale,
* pendant le passage de la tête de récolte (1) de la disposition de récolte (EA) à la disposition de transport (TA), on libère tout d'abord un dispositif de liaison (12) de la tête de récolte (1) de façon que l'unité de paillage (3) pivote autour d'un second axe de pivotement (II) et l'unité de paillage (3) pivote alors de la position de récolte (E) dans la position de transport (T).
